# EUROPÄISCHE PATENTSCHRIFT

(11) **EP 2 729 361 B1**
(45) Veröffentlichungstag und Bekanntmachung des Hinweises auf die Patenterteilung: **10.08.2016**
(21) Anmeldenummer: 12733617.0
(22) Anmeldetag: 15.06.2012
(51) Int. Cl.: B63B 17/00, B63G 8/38, F16H 25/22

(54) **AKTUATOREINRICHTUNG**
ACTUATOR DEVICE
MOYENS D'ACTIONNEMENT

(30) Priorität: 05.07.2011 DE 102011078646
(43) Veröffentlichungstag der Anmeldung: 14.05.2014
(73) Patentinhaber: Schaeffler Technologies AG & Co. KG, 91074 Herzogenaurach (DE)
(72) Erfinder: GERNER, Armin, 96178 Pommersfelden (DE); BERESCH, Eduard, 97529 Sulzheim (DE); LEHMANN, Christian, 91056 Erlangen (DE)
(86) Internationale Anmeldenummer: PCT/EP2012/061413
(87) Internationale Veröffentlichungsnummer: WO 2013/004469

(56) Entgegenhaltungen:
- EP-A2- 1 847 454
- WO-A1-02/061922
- DE-A1- 3 738 928
- GB-A- 1 578 476
- GB-A- 2 385 104
- US-A1- 2006 266 146
- US-A1- 2010 050 796
- US-A1- 2011 023 641

## Beschreibung

### Gebiet der Erfindung

Die Erfindung betrifft eine Aktuatoreinrichtung zur axialen Verlagerung eines in einer Führungseinrichtung geführten Schiffausstattungsteils aus einer ersten Stellung in eine zweite Stellung, wobei die Aktuatoreinrichtung eine Stellspindel und eine darauf sitzende Stellmutter aufweist, und bei der die Stellspindel sowie die Stellmutter axial über Wälzplaneten miteinander gekoppelt sind, so dass durch Herbeiführung einer Relativdrehung zwischen der Stellspindel und der Stellmutter die Stellspindel und die Stellmutter reversierbar gegeneinander axial verlagerbar sind, bei der die Herbeiführung jener Relativdrehung mittels eines in die Aktuatoreinrichtung eingebundenen Elektromotors erfolgt, welcher koaxial zur Stellmutter angeordnet ist.

### Hintergrund der Erfindung

Aus DE 37 38 928 A1 ist ein Periskop für U-Boote bekannt, das einen Periskopmast umfasst, welcher in einer Umhausung aufgenommen ist. Die Umhausung ist im oberen Bereich des U-Bootes montiert. Am oberen Endbereich des Periskopmastes ist eine elektronische Beobachtungseinrichtung angebracht. Diese elektronische Beobachtungseinrichtung kann durch Ausfahren des Periskopmastes über den Wasserspiegel gehoben werden, wobei das U-Boot selbst unter der Wasseroberfläche verweilen kann. Die Übertragung der durch diese Beobachtungseinrichtung aufgenommenen Bildinformationen in das Innere des U-Boots erfolgt über elektrische Signalleitungen, welche über druckfeste Kabeldurchführungen durch den U-Bootmantel hindurchgeführt sind. Die zum Ausheben des Periskopmastes vorgesehene Schiffsaustattungsmechanik umfasst eine Führungseinrichtung, die in der vorgenannten Umhausung aufgenommen ist. An dieser Führungseinrichtung ist der Periskopmast axial verschiebbar geführt. Die Generierung der zur Verlagerung des Periskopmastes erforderlichen Stellkräfte erfolgt durch einen in die Schiffsausstattungsmechanik eingebundenen Hydraulikzylinder.

Bei der Verwendung von immersiv, d.h. unterhalb des Wasserspiegels ölhdraulisch betriebenen Schiffsaustattungsmechaniken besteht das Problem, dass Veränderungen des Umgebungsdruckes des Hydraulikzylinders zu einer Verlagerung der Kolbenstange führen können. Dieses Phänomen tritt insbesondere bei unvollständiger Entlüftung des Hydrauliksystems auf. Weiterhin besteht bei den verbreiteten Vorrichtungen zum Ausheben von mastartigen Strukturen aus dem Bereich eines U-Bootes auch das Problem, dass die bislang eingesetzten Mechanismen eine relativ häufige Wartung erfordern. Obgleich über die dort vorgesehenen ölhydraulisch betriebenen Hubzylinder relativ große Stellkräfte realisiert werden können besteht weiterhin auch das Problem, dass insbesondere bei der Aktivierung der Schiffsaustattungsmechanik nach längerer Standzeit ausgeprägte Slip-Stick Phänomene auftreten können. Die hiermit verbunden akustischen Ereignisse sowie auch die durch das Hydrauliksystem selbst verursachten akustischen Ereignisse können sich aufgrund der damit gegebenen Ortbarkeit unter bestimmten Einsatzbedingungen als problematisch erweisen.

Vor diesem Hintergrund ist aus der US 2006/0 266 146 A1 eine elektromotorische Stelleinrichtung mit einem Gehäuse bekannt, in dem radial innen zentral eine Stellspindel und koaxial darüber eine Stellmutter angeordnet sind. Radial zwischen der Stellmutter und der Stellspindel sind Wälzplaneten angeordnet, welche mittels zugeordneter Gewinde eine Rotationsbewegung der Spindel an die Stellmutter weiter geben, die sich in dadurch axial in dem Gehäuse bewegt.

Die Stellmutter ist fest mit einem hohlzylindrischen Lenker verbunden, welcher sich bei einer Axialbewegung der Stellmutter abgedichtet aus dem Gehäuse heraus oder in dieses hinein bewegt. Der Elektromotor dieser Stelleinrichtung ist axial hinter der Stellmutter angeordnet.

Einen ähnlichen Aufbau zeigt eine aus der GB 2 385 104 A bekannte elektromotorisch antreibbare Stellvorrichtung mit einer Stellspindel und einer radial darüber angeordneten Stellmutter, bei welcher der die Stellspindel antreibe Elektromotor ebenfalls mit axialem Abstand zur Stellmutter angeordnet ist.

Aus der US 2010/0 050 796 A1 ist eine elektromechanische Stellvorrichtung für ein Schiffsausrüstungsteil bekannt, welche eine durch einen Elektromotor antreibbare Stellspindel und ein mit der Stellspindel zusammenwirkendes Kugelumlaufgetriebe aufweist. Der Elektromotor ist ebenfalls mit axialem Abstand zur Stellmutter angeordnet.

Ein Kugelumlauftrieb ist in einer speziellen Ausführungsform beispielsweise aus der US 2011/0 023 641 A1 bekannt. Bei diesem sind die Kugeln über Abstandsmittel voneinander beabstandet, mit denen sie eine Kette bilden. Die GB 1 578 476 A zeigt ein Planetenwälzgetriebe mit einem speziellen Dichtelement, welches radial abdichtend auf den Ringnuten der Spindelwelle aufsitzt. Beide Antriebe dienen zur Umsetzung einer Rotationsbewegung in eine axiale Stellbewegung.

### Aufgabe der Erfindung

Der Erfindung liegt die Aufgabe zugrunde, eine Aktuatoreinrichtung zur axialen Verlagerung eines Periskoprohres, eines Mastrohres oder eines Gasaustauschschnorchels eines U-Bootes aus einer ersten Stellung in eine zweite Stellung vorzustellen, die sich durch einen robusten und wartungsunempfindlichen Aufbau sowie durch ein unter akustischen Gesichtspunkten vorteilhaftes mechanisches Betriebsverhalten auszeichnet.

### Erfindungsgemäße Lösung

Die Lösung dieser Aufgabe wird mit einer Aktuatoreinrichtung erreicht, welche die Merkmale des einzigen Patentanspruchs aufweist.

Demnach geht die Erfindung aus von einer Aktuatoreinrichtung zur axialen Verlagerung eines in einer Führungseinrichtung geführten Schiffausstattungsteils aus einer ersten Stellung in eine zweite Stellung, wobei die Aktuatoreinrichtung eine Stellspindel und eine darauf sitzende Stellmutter aufweist, und bei der die Stellspindel sowie die Stellmutter axial über Wälzplaneten miteinander gekoppelt sind, so dass durch Herbeiführung einer Relativdrehung zwischen der Stellspindel und der Stellmutter die Stellspindel und die Stellmutter reversierbar gegeneinander axial verlagerbar sind, bei der die Herbeiführung jener Relativdrehung mittels eines in die Aktuatoreinrichtung eingebundenen Elektromotors erfolgt, welcher koaxial zur Stellmutter angeordnet ist. Bei dieser Aktuatoreinrichtung ist zur Lösung der gestellten Aufgabe außerdem vorgesehen, dass das Schiffausstattungsteil ein Periskoprohr, ein Mastrohr oder ein Gasaustauschschnorchel eines U-Bootes ist, dass der Elektromotor als ein bürstenloser Elektromotor ausgebildet und koaxial sowie radial über der Stellmutter angeordnet ist, und dass der Rotor des Elektromotors ein integraler Bestandteil der Stellmutter ist.

Diese elektromechanische Aktuatoreinrichtung weist einen robusten und wartungsfreundlichen Aufbau sowie ein akustisch vorteilhaftes mechanisches Betriebsverhalten auf, denn mittels dieser lässt sich ein Periskoprohr, ein Mastrohr oder ein Gasaustauschschnorchel eines U-Bootes besonders ruckfrei und geräuscharm in eine präzise einstellbare Position verlagern. Die angefahrene Position kann zuverlässig und ohne besonderen Nachregelungsaufwand beibehalten werden, da der Planetenwälzgewindemechanismus so ausgelegt werden kann, dass dieser trotz seiner Leichtgängigkeit selbsthemmend ist. Soweit der durch die Stellspindel und die darauf sitzende Stellmutter realisierte Stelltrieb derart leichtgängig ausgeführt ist, dass durch diesen keine Selbsthemmung gegeben ist, ist es möglich, im Bereich des Elektromotors oder auch im Bereich der Stellmutter Halteorgane anzuordnen, die dann, wenn der Elektromotor stromlos geschaltet ist, ein ausreichendes Halteelement erzeugen und damit eine unkontrollierte Verstellung unter Wirkung der Betriebskräfte verhindern.

Der Elektromotor ist sehr vorteilhaft als bürstenloser Elektromotor ausgeführt und koaxial zur sowie radial über der Stellmutter angeordnet. Die Stellmutter ist hierbei ein Teil des Rotors und trägt diesen.

Die Wicklungen des Elektromotors sind vorzugsweise in ein Füllmaterial, beispielsweise ein in Kunstharz eingegossen, das die Zwischenräume zwischen den Wicklungen ausfüllt, so dass im Bereich des Stators praktisch kein Raum für etwaig eindringendes Wasser besteht. Es ist möglich, die Gehäusestrukturen des Elektromotors mit den zur Lagerung der Stellmutter erforderlichen Strukturen zu vereinigen. So kann ein den Stator oder die Statoren tragendes und zudem die Stellmutter lagerndes Strukturbauteil als zweischaliges Gehäuseteil ausgeführt sein. Dieses Gehäuseteil kann so gestaltet sein, dass durch dieses eine Baugruppe geschaffen wird, die letztlich Lagerung und den Antrieb der Stellmutter bewerkstelligt und zu Spindelelementen verschiedenster Längen kompatibel ist.

Der Elektromotor wird vorzugsweise über eine Leistungselektronik angesteuert, durch welche für die Beschleunigung und die Abbremsung des Elektromotors bestimmte Geschwindigkeitsprofile, z.B. ein Sanftanlauf hinterlegt sind, so dass durch die Beschleunigungs- und Abbremsdynamik keine unzulässig großen oder stoßartige Massenkräfte an der Stellmutter angreifen. Die Leistungselektronik kann so gestaltet werden, dass diese eine ggf. programmierbare Steuerschaltung umfasst. Die Leistungselektronik ist vorzugsweise unmittelbar in die Aktuatoreinrichtung eingebunden. Die Leistungselektronik kann weiterhin so ausgebildet sein, dass diese zur Spannungsversorgung mit einer Niedervolt-Gleichspannung beaufschlagt werden kann. Die entsprechende Umrichtung und Phasenaufsplittung für die einzelnen Motorwicklungen wird über die Leistungselektronik bewerkstelligt. Der Betrieb des Elektromotors, insbesondere dessen Drehrichtung, können über die Polung der Niedervolt-Spannungsversorgung gesteuert werden. Die Leistungselektronik generiert dabei bei plötzlichem Anliegen der Versorgungsspannung ein Läuferdrehfeld nach Maßgabe eines Sanftanlaufprofiles. Bei plötzlichem Abschalten der Spannungsversorgung wird über die Leistungselektronik noch ein Sanftauslauf veranlasst, durch welchen vermieden wird, dass der Motor extrem als Bremsmotor läuft. Bei Umkehr der Polung der Versorgungsspannung kann dies über die Leistungselektronik erkannt und auch eine entsprechenden Umkehrung der Laufrichtung des Drehfeldes des Stators veranlasst werden. Die Motorleistungselektronik kann unmittelbar in die Aktuatoreinrichtung integriert sein. Es ist möglich, die Motorleistungselektronik als von außen programmierbare Schaltung auszulegen. Die Signalzufuhr kann über die Versorgungsspannungsleitungen erfolgen, indem den anliegenden Spannungen beispielsweise entsprechende Signale aufmoduliert werden.

Weiterhin kann eine Huberfassungseinrichtung zum Erfassen des Verlagerungszustandes der Stellspindel gegenüber der Stellmutter vorhanden sein. Diese Huberfassungseinrichtung kann als Absolutweggeber ausgebildet sein, durch welchen für den Ausfahrzustand der Stellspindel die Absolutpositionen ermittelt werden können. Dieser Absolutweggeber kann insbesondere als laseroptischer oder Ultraschall-Sensor ausgebildet und in den Innenbereich der Aktuatoreinrichtung eingebunden sein. Die Huberfassungseinrichtung kann auch so gestaltet sein, dass diese eine Magnetspur auf der Spindel und/oder Kerben auf den Spitzen der Rillen umfasst, die detektiert oder gezählt werden können. Weiterhin kann auch in Verbindung mit der Endlagenerfassung oder einer Referenzpunkterfassung die Hubposition durch Interpolation ermittelt werden, wobei hierbei erfasster Schlupf bei jedem Hub von der elektronischen Steuerung berücksichtigt und kompensiert wird. Jene Huberfassungseinrichtung kann signaltechnisch derart mit der Leistungselektronik gekoppelt sein, dass die Stellgeschwindigkeit bzw. die Motordrehzahl auf die momentane Spindelposition abgestimmt wird. So kann beispielsweise das Sanftanlauf- und Sanftabbremsgeschwindigkeitsprofil bei Erreichen der Hubenden automatisch aktiviert werden.

Insbesondere für den Fall, dass keine Huberfassungseinrichtung vorgesehen ist, ist vorzugsweise zumindest eine Endlagenerfassungseinrichtung vorgesehen, durch welche entsprechende Hubstellungssignale generiert werden. Diese Endlagenerfassungseinrichtung kann derart in die Antriebseinrichtung integriert und mit der Motorleistungselektronik gekoppelt sein, dass die entsprechenden Abschaltungssignale unmittelbar der Antriebseinrichtung zur Verfügung stehen, so dass selbst dann, wenn die äußere Spannungsversorgung auch bei Erreichen der Endlage andauert, der Betrieb des Motors beendet wird. Die abschaltrelevante Endlage kann so festgelegt sein, dass diese noch mit einem hinreichend sanften Abbremsprofil überfahren werden kann, und noch ein ausreichender Sicherheitsabstand zu einer mechanisch bedingten Endstellung gegeben ist.

Die Aktuatoreinrichtung ist vorzugsweise so ausgebildet, dass diese eine Gehäuseeinrichtung zur Aufnahme der Stellmutter in abgekapselter Weise aufweist. Diese Gehäuseeinrichtung ist vorzugsweise so gestaltet, dass durch diese auch ein wirkungsvoller Schutz der Stellspindel in eingezogenem Zustand erreicht wird. In ausgefahrenem Zustand wird durch die Gehäuseeinrichtung der Rückzugsraum freigehalten. Die Gehäuseeinrichtung kann als tragendes Bauteil fungieren und beispielsweise die Lagerung der Stellmutter tragen. Die Gehäuseeinrichtung ist vorzugsweise derart ausgebildet, dass diese einen zylinderrohrartigen Aufnahmeraum zur Aufnahme der Stellspindel bildet. Die Aktautorreinrichtung kann damit insgesamt als hubzylinderartiger elektromechanischer Stelltrieb gestaltet sein. Die Aktuatoreinrichtung kann in vorteilhafter Weise mit einer Faltenbalg oder Rollbalg oder Ballonstruktur versehen sein, welche den Endbereich des auszufahrenden Bauteils, insbesondere der Stellspindel mit der Gehäuseeinrichtung derart koppelt, dass die Innenmechanik der Aktuatoreinrichtung, insbesondere die Gewindezone gegenüber der Umgebung abdichtend abgeschirmt ist. Insbesondere bei der Realisierung dieser elastisehen Schutzeinrichtung als Ballonstruktur ist es möglich, im Innenbereich derselben durch Druckluft oder ein anderweitiges Gas einen geringen Überdruck einzustellen, welcher einem Zutritt von Wasser entgegenwirkt. Der Faltenbalg oder Rollbalg kann mit einer flexiblen Einlage, insbesondere einer Gewebe oder Spiralfedereinlage versehen sein, durch welche diese Struktur radial ausgesteift wird, so dass diese sich entsprechend dem Ausfahrzustand der Aktuatoreinrichtung lediglich axial streckt oder verkürzt. Die im wesentlichen den Ausfahrbereich der Stellspindel längenveränderbar abschirmende flexible Schutzstruktur kann als räumlich komplexeres Strukturbauteil gefertigt sein, das weite Zonen der Gehäuseeinrichtung, ggf. die gesamte Gehäuseeinrichtung aufnimmt. Dieses Strukturbauteil kann aus einem Elastomermaterial, insbesondere Silikonkautschuk, oder NPBR gefertigt sein. Dieses Bauteil kann ggf. abschnittsweise direkt an die Gehäuseeinrichtung oder ein auf der Stellspindel sitzendes Kopfelement anvulkanisiert sein. Über dieses elastomere Strukturbauteil können in besonders vorteilhafter Weise auch wasserdichte Kabeldurchführungen realisiert werden. Die erfindungsgemäße Aktuatoreinrichtung kann hierbei als im wesentlichen hermetisch gegenüber der Umgebung abgedichtetes, wasserdichtes Stellmodul ausgeführt werden. Hinsichtlich seiner äußeren Abmessungen kann dieses Stellmodul so gestaltet werden, dass dieses als Austauschteil zu verbreiteten, herkömmlichen hydraulischen Stelleinrichtungen eingesetzt werden kann.

Gemäß einem besonderen Aspekt kann die Aktuatoreinrichtung eine Dichteinrichtung aufweisen, die derart ausgebildet ist, dass diese den Bewegungsspalt zwischen Spindel und Mutter bis in die Gewindezüge hinein abdichtet. Die Dichtungseinrichtung umfasst hierzu vorzugsweise eine aus einem Elastomermaterial gefertigte Ringbuchse, in deren Innenumfangsbereich eine zur Außengeometrie der Stellspindel komplementäre Innengewindegeometrie ausgebildet ist. Diese Elastomerbuchse ist vorzugsweise derart an einen zur Erhaltung der Umfangsdistanz der Planetenwalzen vorgesehenen Führungsring angebunden, dass die Elastomerbuchse mit jenem Führungsring umläuft. Im Außenumfangsbereich der Elastomerbuchse ist vorzugsweise ein Schleifdichtungsprofil, beispielsweise mit mehreren Umfangsdichtlippen ausgebildet, welche an der Stellmuter, oder an einer die Stellmutter lagernden Struktur anlaufen. Durch diesen Aufbau wird es möglich, die Gewindefurchen durch eine in die Gewindefurchen eindringende Elastomerstruktur abzudichten. Diese Elastomerstruktur hat im wesentlichen die Gestalt eines Gewindezugs. In diesen Gewindezug können Detailgeometrien, wie z.B. Mikrodichtlippen, Querrillen und anderweitige, die Dichtwirkung unterstützende Geometrien eingeformt sein. Die Elastomerbuchse ist vorzugsweise so geformt, dass diese mit einer gewissen Vorspannung auf der Stellspindel sitzt. In die Elastomerstruktur kann ein Verstärkungskern, insbesondere ein aus Blech gezogener oder gewickelter Ringkern einvulkanisiert sein, welcher den Elastomerkörper aussteift und ggf. der Anbindung desselben an eine mit den Planetenwalzen umlaufende Struktur dient.

Soweit die Aktuatoreinrichtung gegenüber der Umgebung mit einer Dichtungseinrichtung abgedichtet ist, ist es in vorteilhafter Weise möglich, die Aktuatoreinrichtung mit einem Fluid, insbesondere einem korrosionsunterbindenden Fluid zu befüllen. Hierdurch wird dem Zutritt von Seewasser in den Innenbereich der Mechanik weiter vorgebeugt. Über die innere Fluidfüllung kann auch die Kühlung des Stators des Elektromotors unterstützt werden. Um einen Ausgleich des beim Verfahren der Stellspindel sich verändernden Innenvolumens zu erreichen, ist vorzugsweise eine Volumenausgleichseinrichtung vorgesehen, die beispielsweise einen in der Stellspindel verfahrbaren Kolben umfasst. Bei Ausfahren der Spindel wandert der Kolben innerhalb der Spindel und ermöglicht damit den Ausgleich des Volumens der Stellspindel.

Die Stellspindel kann in der Art einer Kolbenstange an geeigneter Stelle in den Gesamtmechanismus eingebunden sein. Die Stellspindel kann auch unmittelbar das zu verlagernde Schiffsausstattungsteil, insbesondere ein Periskoprohr, einen Gasaustauschschnorchel oder ein Mastrohr bilden. Die erfindungsgemäße Aktuatoreinrichtung kann so angeordnet sein, dass diese zumindest zeitweise von Seewasser umspült wird.

### Kurzbeschreibung der Figuren

Weitere Einzelheiten und Merkmale der Erfindung ergeben sich aus der nachfolgenden Beschreibung in Verbindung mit der Zeichnung. Es zeigt
- Figur 1: eine Axialschnittdarstellung durch eine erfindungsgemäße Aktuatoreinrichtung, bei welcher die Stellspindel unmittelbar als Periskoprohr fungiert,
- Figuren 2a und 2b: zwei Skizzen zur Veranschaulichung einer weiteren Variante einer erfindungsgemäßen Aktuatoreinrichtung,
- Figur 3: eine Axialschnittdarstellung zur Veranschaulichung weiterer Ausgestaltungsmöglichkeiten einer erfindungsgemäßen Aktuatoreinrichtung.

### Ausführliche Beschreibung der Figuren

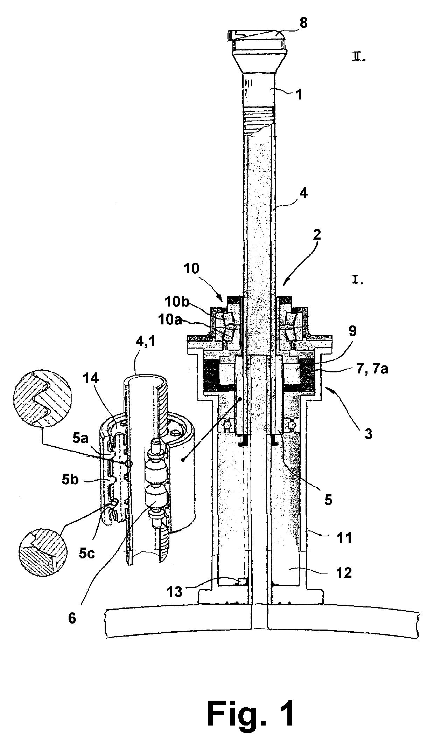

In Figur 1 ist in Form einer vereinfachten Axialschnittdarstellung eine erfindungsgemäße Aktuatoreinrichtung dargestellt, die als solche zum Verlagern eines Schiffausstattungsteiles 1, wie eines Periskoprohres, eines Mastrohres oder eines Gasaustauschschnorchel eines U-Bootes, aus einer ersten Stellung I. in die hier gezeigte zweite Stellung II. dient.

Die Aktuatoreinrichtung 3 weist eine Führungseinrichtung 2 zur Führung des Periskoprohres 1, Mastrohres oder Gasaustauschschnorchel eines U-Bootes auf. Die Aktuatoreinrichtung 3 dient zur Aufbringung einer dieses Schiffausstattungsteil 1 verlagernden Stellkraft. Die Aktuatoreinrichtung 3 weist eine Stellspindel 4 und eine darauf sitzende Stellmutter 5 auf, und die Stellspindel 4 sowie die Stellmutter 5 sind über Wälzplaneten 6 miteinander gekoppelt, so dass durch Herbeiführung einer Relativdrehung zwischen der Stellspindel 4 und der Stellmutter 5 die Stellspindel 4 und die Stellmutter 5 reversierbar gegeneinander axial verlagerbar sind. Die Herbeiführung jener Relativdrehung erfolgt vermittels eines Elektromotors 7, der in die Aktuatoreinrichtung 3 eingebunden ist.

Mittels der hier gezeigten Aktuatoreinrichtung 3 wird es möglich, beispielsweise einen auf dem Periskoprohr 1 sitzenden Periskopkopf 8 ruckfrei und geräuscharm in eine präzise einstellbare Position zu verlagern. Auch wenn der Elektromotor 7 nach Erreichen der Sollposition stromlos geschaltet wird, wird die angefahrene Position zuverlässig und ohne besonderen Nachregelungsaufwand beibehalten.

Die Wälzplaneten 6 sind durch Ringschultern 5a, 5b, 5c in der Stellmuter 5 axial abgestützt. Die Wälzplaneten 6 bilden eine Umfangsprofilierung, hier keine Gewinde, welche in die Gewindeprofilierung der Stellspindel 4 eingreifen kann. Bei Drehung der Stellmutter 5 gegenüber der Stellspindel 4 wälzen die Wälzplaneten 6 ähnlich den Wälzkörpern eines Nadellagers innerhalb des Ringraumes zwischen Stellspindel 4 sowie Stellmutter 5 ab und folgen dabei mit einer gewissen Untersetzung der Drehung der Stellmutter 5. Die Wälzplaneten 6 werden stirnseitig an Distanzringen 14 geführt. Die Innengeometrie der Stellmutter 5, die Außengeometrie der Wälzplaneten 6 und die Außengeometrien der Stellspindel 4 sind so aufeinander abgestimmt, dass diese Komponenten sich in radialer Richtung unter einer leichten Vorspannung spielfrei aneinander abstützen. Die Koppelung der Wälzplaneten 6 mit der Stellmutter 5 erfolgt in Axialrichtung formschlüssig und in Umfangsrichtung reibschlüssig.

Bei dem in den Figuren gezeigten Ausführungsbeispiel ist der Elektromotor 7 koaxial sowie radial über der Stellmutter 5 angeordnet. Der Rotor 9 des Elektromotors 7 sitzt unmittelbar auf der Stellmuter 5, ist integraler Bestandteil derselben. Der Elektromotor 7 ist als bürstenloser Elektromotor ausgeführt. Der Stator 7a des Elektromotors 7 umfasst mehrere Wicklungen, die über eine hier nicht näher dargestellte Motorleistungselektronik jeweils mit einem bestimmten Profil und einer bestimmten Phasenlage mit Spannung beaufschlagt werden.

Die Spannungsbeaufschlagung erfolgt derart, dass über den Stator 7a ein Drehfeld generiert wird, welches den Rotor mit einem entsprechenden Drehmoment beaufschlagt. Der Elektromotor 7 kann auch einen konstruktiv abweichenden Aufbau aufweisen und beispielsweise in der Art eines Schrittmotors oder eines Synchronmotors mit einem dauermagnetischen Rotor ausgebildet sein.

Die Lagerung der Stellmutter wird über eine Wälzlagerung 10 bewerkstelligt. Diese umfasst bei dem hier gezeigten Ausführungsbeispiel zwei Kegellager 10a, 10b, über welche eine radiale sowie auch eine axiale Abstützung der Stellmutter 5 bewerkstelligt werden. Die erfindungsgemäße Aktuatoreinrichtung 3 umfasst weiterhin eine Gehäuseeinrichtung 11 zur Aufnahme der Stellmutter 5 in abgekapselter Weise. Die Gehäuseeinrichtung 11 ist derart ausgebildet, dass diese einen Aufnahmeraum 12 zur Aufnahme der Stellspindel 5 bildet.

In dem durch die Gehäuseeinrichtung 11 gebildeten Aufnahmeraum 12 ist eine Huberfassungseinrichtung 13 zum Erfassen des Verlagerungszustandes der Stellspindel 4 gegenüber der Stellmutter 5 vorgesehen. Bei dem hier gezeigten Ausführungsbeispiel ist die Huberfassungseinrichtung 13 als laseroptischer Sensor ausgebildet, durch welchen für die momentane Position der Stellspindel 4 ein Absolutwert ermittelbar ist. Die Huberfassungseinrichtung 13 kann auch einen konstruktiv abweichenden Aufbau aufweisen, z.B. in die Stellmutter 5 integriert sein. Weiterhin kann die Position der Stellspindel auch durch Drehwinkelmessung oder auch durch die Erfassung der Rotordrehung über die Motorstromversorgung erfolgen. Obgleich hier nicht dargestellt, kann die Aktuatoreinrichtung 3 auch eine Endlagenerfassungseinrichtung aufweisen, durch welche bei Erreichen der Aus- oder Einfahrendposition ein Signal generiert wird, durch welches die Motorstromversorgung unterbrochen wird.

Die Aktuatoreinrichtung 3 umfasst gemäß dem gewählten Ausführungsbeispiel eine in dieser Darstellung nicht näher gezeigte Dichteinrichtung, durch welche der Gewindespalt abgedichtet wird. Diese Dichtungseinrichtung umfasst vorzugsweise eine Elastomerstruktur, die gemeinsam mit dem Distanzring 14 des Planetenwälzgewindetriebes umläuft und in die Gewinderillen der Stellspindel 4 eingreift und diese abdichtet.

Bei dem hier gezeigten Ausführungsbeispiel ist die Aktuatoreinrichtung 3 derart gestaltet, dass die Stellspindel 4 zugleich das zu verlagernde Schiffausstattungsteil 1, hier ein Periskoprohr, darstellt. Die hier gezeigte Bauform, bei welcher die Stellspindel 4 in das zu verlagernde Periskoprohr 1 eingebunden ist, eignet sich insbesondere auch für Antennenmasten und Schnorchelrohre. Die Stellspindel 4 oder das Gehäuse 11 müssen nicht unmittelbar Bestandteil des zu verlagernden Schiffsaustattungsteiles 1 sein, sondern können ein Bestandteil eines Gelenkgetriebemechanismus sein, durch welchen jenes Schiffausstattungsteil 1 betätigbar ist.

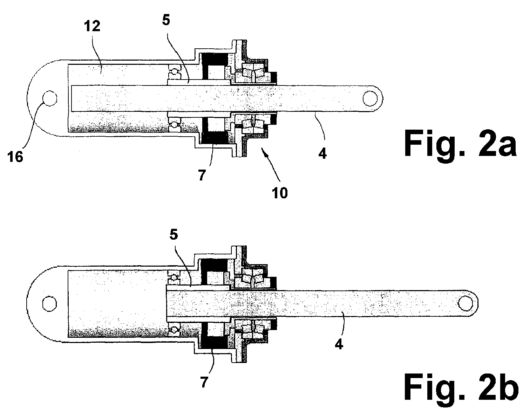

In den Figuren 2a und 2b ist eine Aktuatoreinrichtung 3 dargestellt, welche insbesondere einen Teil eines Gelenkgetriebemechanismus bilden kann, durch welchen ein hier nicht näher dargestelltes Periskoprohres 1, Mastrohres oder Gasaustauschschnorchel eines U-Bootes in eine geforderte Position verlagert werden kann. Diese Aktuatoreinrichtung 3 umfasst wie bei dem vorangehend beschriebenen Ausführungsbeispiel eine Stellspindel 4 und eine darauf sitzende Stellmutter 5, wobei die Stellspindel 4 und die Stellmutter 5 über hier nicht näher dargestellte Wälzplaneten (sog. PWG-System) miteinander gekoppelt sind, so dass durch Herbeiführung einer Relativdrehung zwischen der Stellspindel 4 und der Stellmutter 5 jene Stellspindel 4 und jene Stellmutter 5 reversierbar gegeneinander axial verlagerbar sind. Die Herbeiführung jener Relativdrehung erfolgt auch hier vermittels eines Elektromotors 7.

Durch die hier gezeigte Aktuatoreinrichtung 3 wird es möglich, die Stellspindel 4 ruckfrei und geräuscharm gegenüber der Gehäuseeinrichtung 11 zu verfahren. Die Gehäuseeinrichtung 11 bildet einen zylindrischen Aufnahmeraum, in welchem die Stellspindel 5 hinreichend weit einfahrbar ist. Die Gehäuseeinrichtung 11 bildet ein tragendes Bauteil der Schiffsaustattungsmechanik und ist in ihrem Bodenbereich mit einem Gelenkauge 16 versehen. Der Elektromotor 7, die Stellmutter 5 und die Stellmutterlagerung 10 bilden eine Topf-Baugruppe, die frontal in die Gehäuseeinrichtung 11 eingesetzt und mit dieser gekoppelt ist. Die an der Stellspindel 4 angreifenden Axialkräfte werden damit über die Stellmutter 5 in die Lagerung 10 eingeleitet. Die Lagerung 10 stützt sich an der Gehäuseeinrichtung 11 ab. Die über die Lagerung 10 in die Gehäuseeinrichtung 11 eingeleiteten Kräfte werden über einen in dem Gelenkauge 16 sitzenden Bolzen abgeleitet.

Figur 2b zeigt die erfindungsgemäße Aktuatoreinrichtung 3 in einem Zustand mit maximal ausgefahrener Stellspindel 4. Der Ausfahrweg der Stellspindel 4 kann durch Endanschlagseinrichtungen, die ggf. innerhalb der hier gezeigten Aktuatoreinrichtung 3 vorgesehen sind, begrenzt werden. Der Ausfahrweg kann auch durch anderweitige Begrenzungssysteme, die beispielsweise über die betätigte Mechanik verwirklicht sind, begrenzt werden.

Die Schiffsaustattungsmechanik kann auch so gestaltet sein, dass die Stellspindel über den Elektromotor 7 in Rotation versetzt und dabei die Stellmutter 5 axial verlagert wird.

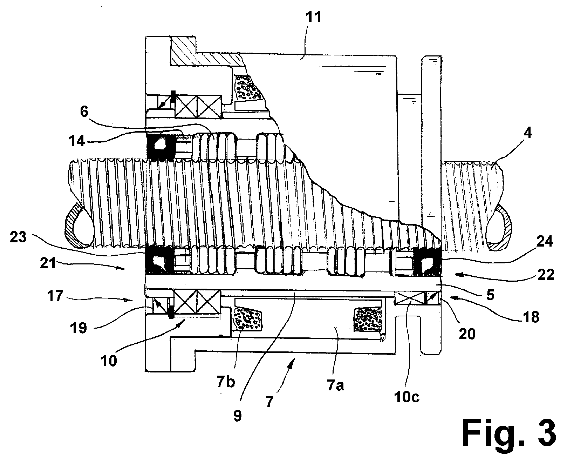

In Figur 3 ist ein weiteres Ausführungsbeispiel einer erfindungsgemäßen Aktuatoreinrichtung 3 dargestellt. Bei diesem Ausführungsbeispiel ist die Stellmutter 5 in einem Gehäuse 11 drehbewegbar gelagert. Die entsprechende Lagerung 10 umfasst ein Festlager, durch welches die Stellmutter 5 in dem Gehäuse 11 axial und radial abgestützt ist. Die Stellmutter 5 ist in dem Gehäuse 11 weiterhin durch ein Loslager 10c radial abgestützt. Die Laufspalte 17, 18 zwischen der Stellmutter 5 und dem Gehäuse 11 werden durch Wellendichtringe 19, 20 abgedichtet.

Die zwischen der Stellspindel 4 und der Stellmuter 5 gebildeten stirnseitigen Laufspalte 21, 22 werden durch Elastomerringe 23, 24 abgedichtet. Diese Elastomerringe 23, 24 weisen in ihrem Innenumfangsbereich eine Gewindeprofilierung auf und greifen in das Gewindeprofil der Stellspindel 4 ein. Die Elastomerringe 23, 24 bilden auch in ihrem Außenumfangsbereich ein Dichtungsprofil und liegen mit diesem an der Innenwandung der Stellmutter 5 an. Alternativ hierzu können diese Außenumfangsdichtlippen auch direkt an einer Innenumfangswandung des Gehäuses 11 anliegen. Bei dieser Variante können die Dichtringe 19, 20 entfallen.

Bei dem hier gezeigten Ausführungsbeispiel sind die Elastomerringe 23, 34 derart in die Anordnung eingebunden, dass diese gemeinsam mit den Wälzplanenten 6 um die Stellspindel 4 umlaufen. Die entsprechende Koppelung wird erreicht, indem die Elastomerringe 23, 24 an die Distanzringe 14 angebunden werden. Durch diese Maßnahme wird es möglich, die Gewindefurchen der Stellspindel 5 abzudichten. Hierdurch wird es wiederum möglich, den Zutritt von Verunreinigungen und insbesondere Feuchtigkeit in den Innenbereich der Mechanik zu unterbinden. Weiterhin wird es möglich, den Innenbereich mit Schmierstoff, insbesondere Fett zu befüllen und diesen Schmierstoff wirkungsvoll in der Mechanik zurückzuhalten.

Der integrierte Elektromotor 7 ist hier als Schrittmotor ausgeführt und umfasst einen mehrpoligen, in dem Gehäuse 11 fixierten Stator 7a. Auf dem Stator 7a sitzen mehrere Wicklungen 7b, die über eine hier nicht näher dargestellte Motorelektronik mit Spannung beaufschlagbar sind. Das über den Stator 7a generierte Feld greift an dem Rotor 9 an. Der Rotor 9 ist als Schrittmotorrotor ausgeführt und bildet einen integralen Bestandteil der Stellmutter 5.

Bei entsprechender Spannungsbeaufschlagung des Stators 7a wird in die Stellmutter 5 über den Rotor 9 ein Antriebsmoment eingeleitet und die Stellmuter 5 in Rotation versetzt. Hierbei werden die Stellspindel 5 und das Gehäuse 11 gegeneinander verschoben.

Die gezeigte Mechanik kann mit einem Schmierstoffversorgungssystem gekoppelt werden, durch welches stets eine ausreichende Schmierstoff-Befüllung des Umlaufraumes der Wälzplaneten gewährleistet ist, so dass durch äußeren Druck allenfalls geringe Mengen von Wasser zu der Mechanik Zugang erhalten. Weiterhin ist es möglich, die Stellspindel mit einem Faltenbalg oder Rollbalg zu ummanteln, so dass auch die Stellspindel 5 an sich gegenüber der Umgebung abgeschirmt ist.

## Patentansprüche

1. Aktuatoreinrichtung (3) zur axialen Verlagerung eines in einer Führungseinrichtung (2) geführten Schiffausstattungsteils (1) aus einer ersten Stellung (I) in eine zweite Stellung (II),
wobei die Aktuatoreinrichtung (3) eine Stellspindel (4) und eine darauf sitzende Stellmutter (5) aufweist, und bei der die Stellspindel (4) sowie die Stellmutter (5) axial über Wälzplaneten (6) miteinander gekoppelt sind,
so dass durch Herbeiführung einer Relativdrehung zwischen der Stellspindel (4) und der Stellmutter (5) die Stellspindel (4) und die Stellmutter (5) reversierbar gegeneinander axial verlagerbar sind,
bei der die Herbeiführung jener Relativdrehung mittels eines in die Aktuatoreinrichtung (3) eingebundenen Elektromotors (7) erfolgt, welcher koaxial zur Stellmutter (5) angeordnet ist, wobei der Elektromotor (7) als ein bürstenloser Elektromotor ausgebildet ist, **dadurch gekennzeichnet,**
**dass** das Schiffausstattungsteil (1) ein Periskoprohr, ein Mastrohr oder ein Gasaustauschschnorchel eines U-Bootes ist,
**dass** der Elektromotor (7)
koaxial sowie radial über der Stellmutter (5) angeordnet ist,
und **dass** der Rotor (9) des Elektromotors (7) ein integraler Bestandteil der Stellmutter (5) ist.

## Claims

1. Actuator device (3) for axially displacing a ship equipment part (1) which is guided in a guide device (2) out of a first position (I) into a second position (II), the actuator device (3) having an actuating spindle (4) and an actuating nut (5) which is seated thereon, and in which actuator device (3) the actuating spindle (4) and the actuating nut (5) are coupled axially to one another via anti-friction planets (6), with the result that the actuating spindle (4) and the actuating nut (5) can be axially displaced reversibly with respect to one another by way of a relative rotation between the actuating spindle (4) and the actuating nut (5) being caused, in which actuator device (3) that relative rotation is caused by means of an electric motor (7) which is incorporated into the actuator device (3) and is arranged coaxially with respect to the actuating nut (5), the electric motor (7) being configured as a brushless electric motor, **characterized in that** the ship equipment part (1) is a periscope tube, a mast tube or a gas exchange snorkel of a submarine, **in that** the electric motor (7) is arranged coaxially and radially above the actuating nut (5), and **in that** the rotor (9) of the electric motor (7) is an integral constituent part of the actuating nut (5).

## Revendications

1. Dispositif d'actionnement (3) pour le déplacement axial d'une pièce d'équipement de bateau (1) guidée dans un dispositif de guidage (2) d'une première position (I) dans une deuxième position (II),
le dispositif d'actionnement (3) présentant une broche de réglage (4) et un écrou de réglage (5) placée sur celle-ci, la broche de réglage (4) et l'écrou de réglage (5) étant accouplés l'un à l'autre axialement par le biais de pignons de roulement (6),
de telle sorte qu'en provoquant une rotation relative entre la broche de réglage (4) et l'écrou de réglage (5), la broche de réglage (4) et l'écrou de réglage (5) puissent être déplacés de manière réversible axialement l'un par rapport à l'autre,
ladite rotation relative étant réalisée au moyen d'un moteur électrique (7) incorporé dans le dispositif d'actionnement (3), lequel est disposé coaxialement par rapport à l'écrou de réglage (5), le moteur électrique (7) étant réalisé sous la forme d'un moteur électrique sans balais, **caractérisé en ce que**
la pièce d'équipement de bateau (1) est un tube de périscope, un tube de mât ou un snorkel d'échange de gaz d'un sous-marin,
le moteur électrique (7) est disposé coaxialement et radialement au-dessus de l'écrou de réglage (5), et
le rotor (9) du moteur électrique (7) fait partie intégrante de l'écrou de réglage (5).
